# EUROPÄISCHE PATENTSCHRIFT

(11) **EP 1 318 928 B1**
(45) Veröffentlichungstag und Bekanntmachung des Hinweises auf die Patenterteilung: **16.06.2004**
(21) Anmeldenummer: 01976070.1
(22) Anmeldetag: 13.08.2001
(51) Int. Cl.: B60R 16/02

(54) **LEITUNGSDURCHFÜHRUNG AN EINER FAHRZEUGTÜR**
CABLE BUSHING ON A VEHICLE DOOR
PASSAGE DE CABLE DANS UNE PORTE DE VEHICULE

(30) Priorität: 14.09.2000 DE 10045875
(43) Veröffentlichungstag der Anmeldung: 18.06.2003
(73) Patentinhaber: Volkswagen Aktiengesellschaft, 38436 Wolfsburg (DE)
(72) Erfinder: KASTNER, Michael, 38446 Wolfsburg (DE)
(86) Internationale Anmeldenummer: PCT/EP2001/009323
(87) Internationale Veröffentlichungsnummer: WO 2002/022402

(56) Entgegenhaltungen:
- DE-A- 4 212 261
- DE-A- 19 714 630
- JP-A- 9 048 241

## Beschreibung

Die Erfindung betrifft eine Leitungsdurchführung an einer Fahrzeugtür, insbesondere eines Leitungsstranges im Bereich deren scharnierseitiger Stirnwandung zur Versorgung von an der Fahrzeugtür angeordneten elektrischen oder elektronischen Komponenten.

In der gattungsbildenden DE 195 20 827 ist eine Fahrzeugtür beschrieben, die mit einer wasserdichten Durchführung für einen Kabelbaum versehen ist. Dieser ist an der scharnierseitigen Stirnwandung der Fahrzeugtür befestigt und zwischen dem Türinnenblech und der Innenseite der Türinnenverkleidung in das Innere der Fahrzeugtür geführt. Dabei ist der Kabelbaum zu einem Flachbandkabel aufgeweitet und mit einem eine Befestigungsplatte aufweisenden elastischen Durchführungskörper abgewinkelt und wasserdicht gegen die Stirnwandung gedrückt und um das Innenblech herum zur Seitenfläche der Türinnenverkleidung gebogen und ortsfest fixiert. Eine vergleichbare Durchführung ist Gegenstand der EP 0 888 930 A1. Das Flachbandkabel ist damit direkt in den zwischen der Türinnenverkleidung und dem Türinnenblech gegebenen Trockenraum eingeführt, ohne von der Stirnseite der Fahrzeugtür zweimal durch das Innenblech und durch den zwischen diesem und dem Außenblech gegebenen Feuchtraum geführt zu werden. Diese sog. Aufblechverlegung eines Kabelbaumes auf dem Innenblech ist gegenüber einer Führung durch das Innenblech vorteilhaft, da Durchgangsöffnungen im Innenblech zur Verlegung des Kabelbaumes entfallen, damit die Anzahl der abzudichtenden Öffnungen damit geringer und überdies die Montage des Kabelbaumes vereinfacht ist, da ein Ein- und Durchfädeln entfällt. Auch entfällt die Anordnung von elastischen Hülsen gegen ein Durchscheuern der Leitungen. Allerdings erfordert diese Verlegungsweise ein zweimaliges Abwinkeln des Kabels um jeweils 90°.

Des weiteren ist in der DE 40 26 217 A1 eine Fahrzeugtür beschrieben, an der am Türinnenblech von der Fahrzeuginnenseite her gesehen Sicken und Eindrückungen als Aufnahmeräume vorgesehen sind, in denen ohne Durchgangsöffnungen am Türinnenblech Anbauteile einschließlich ihrer Anschlußelemente und Anschlußleitungen montiert sind. Beispielsweise ist an der scharnierseitigen Stirnwandung der Fahrzeugtür eine um diese herumlaufende Sicke zur Aufnahme von Anschlußleitungen vorgesehen.

Es ist des weiteren bekannt, in einer derartigen Sicke oder Einsenkung ein Übergangsstück aus einem elastischen Material anzuordnen, das den Leitungsstrang in dessen axialer Richtung abdichtet und das dazu mit seinem im Feuchtraum angeordneten Bereich mit umlaufenden, den Randbereich der Einsenkung abdichtenden Dichtlippen versehen ist. Am Übergangsstück ist einstückig ein den Leitungsstrang im Feuchtraumbereich umgebender Faltenbalg angeordnet. Dieses Übergangsstück muß entsprechend dimensioniert und mit einer Verstärkung versehen sein, um eine Anlage der Dichtlippen mit Vorspannung zu erreichen. Die Verstärkung ist nur mit einem Leitungs-Durchführungsloch begrenzter Größe ausrüstbar, so daß Steckergehäuse oft erst nachträglich konfektioniert werden können. Die Lösung erfordert die Einhaltung sehr eng bemaßter Toleranzen und extrem sauberer Dichtlippen. Aus genannten Gründen ist eine Leitungsdurchführung mit einem derartigen Übergangsstück montageaufwendig und läßt hinsichtlich ihrer Prozeßsicherheit bei der Leitungsverlegung Wünsche offen.

Der Erfindung liegt die Aufgabe zugrunde, eine Leitungsdurchführung an der Stirnseite einer Fahrzeugtür nach dem Oberbegriff des Anspruchs 1 so zu gestalten, daß diese aufwandsreduziert und prozeßsicher montierbar ist.

Diese Aufgabe wird bei einer Leitungsdurchführung nach dem Oberbegriff des Anspruchs 1 durch dessen kennzeichnende Merkmale gelöst. Vorteilhafte Ausgestaltungen sind in den Unteransprüchen aufgeführt.

Die Erfindung besteht darin, daß bei einer Leitungsdurchführung an der Stirnseite, insbesondere an der scharnierseitigen Stirnseite, einer Fahrzeugtür, die am Türinnenblech im Bereich der Stirnseite von der Fahrzeuginnenseite her gesehen eine Einsenkung oder Sicke als Anordnungs- und Durchführungsraum für die Leitung und eine Dichtung aufweist, diese Dichtung am Türinnenblech gehaltert und in radialer Richtung dichtend an der Leitung, der Einsenkung und im Schließzustand der Fahrzeugtür an einer Türdichtung anliegt und den fahrzeuginnenseitig gegebenen Trockenraum gegenüber dem an die Fahrzeugtür grenzenden Feuchtraum abdichtet. Damit wird der durch die Einsenkung im Innenblech und die Türdichtung gebildete Durchführungsraum radial abgedichtet. Die Dichtung ist durch eine elastische Aufweitung und damit mit Vorspannung dicht an der Leitung anordbar und anschließend mit dieser in die Einsenkung einsetz- und mit Vorspannung am Innenblech festlegbar. Der Montageaufwand ist reduziert, ein Einfädeln der Leitung durch eine Dichtung mit einem Aufnahmeloch mit kleinem Durchmesser entfällt, und die Prozeßsicherheit ist durch die unkomplizierte Montage, insbesondere auch wegen zu vernachlässigender Toleranzabweichungen, nicht beeinträchtigt. Steckergehäuse können infolge eines ausreichenden Aufweitens des Aufnahmeloches der elastischen Dichtung zum Zwecke der Anordnung der Leitung mit durch dieses gesteckt und daher vormontiert werden.

Die Dichtung kann dabei so gestaltet sein, daß sie eine an der offenen Seite der Einsenkung, d.h. türdichtungsseitig, ausgebildete verdickte Dichtwulst parallel zur Türdichtung aufweist, um gegenüber dieser ein großzügig bemessene Anlagefläche auszubilden.

In bevorzugter Ausführungsform ist die Dichtung einstückig mit einem die Leitung im Feuchtraumbereich lose umgebenden Faltenbalg verbunden, der karosserieseitig mit einer Tülle zur Anordnung in einer Öffnung im Karosserieblech versehen ist. Diese Maßnahme vereinfacht die Montage und erhöht die Prozeßsicherheit. In eben dieser Weise wirkt sich eine Ausführung der Dichtung, bei der einsenkungsseitig Dichtlippen zur Anlage am Innenblech in der Einsenkung anstelle einer Vollmaterialausführung vorgesehen sind, aus. Mit den Dichtlippen wird eine dichtende Anlage der Dichtwulst in der Einsenkung erleichtert. Überdies ist der Vorteil einer Materialeinsparung gegeben.

Die Dichtung ist auf einfache Weise mit einem Halterungsblech lösbar an der Stirnwandung des Innenblechs befestigt. Das Halterungsblech ist mit der Dichtung verbunden und vorzugsweise im Bereich der Dichtwulst an der Dichtung befestigt und überdeckt die Einsenkung an der Stirnwandung, wobei das Halterungsblech eine Ausnehmung für die Leitung aufweist. Die Befestigung des Halterungsbleches ist, ebenfalls auf einfache Weise, durch an diesem angeordnete Rastdorne gegeben, die in am Dichtungsbalken ausgebildeten Rastaufnahmen eingreifen. Das Halterungsblech mit der an diesem auf genannte Weise befestigten Dichtung ist an der Stirnwandung des Innenblechs vorzugsweise angeschraubt. Damit sind die Dichtung, die Leitung und die Halterungsvorrichtung zu einer Baugruppe vormontierbar, was sich wiederum in einer Senkung des Montageaufwandes an der Fahrzeugtüre niederschlägt.

Die Erfindung wird nachstehend anhand eines Ausführungsbeispiels erläutert. In der zugehörigen Zeichnung zeigen:
- Fig. 1:: eine Leitungsdurchführung an einem Türinnenblech, in perspektivischer Darstellung,
- Fig. 2:: eine Stirnseitenansicht der Leitungsdurchführung und
- Fig. 3:: einen Horizontalschnitt durch diese.

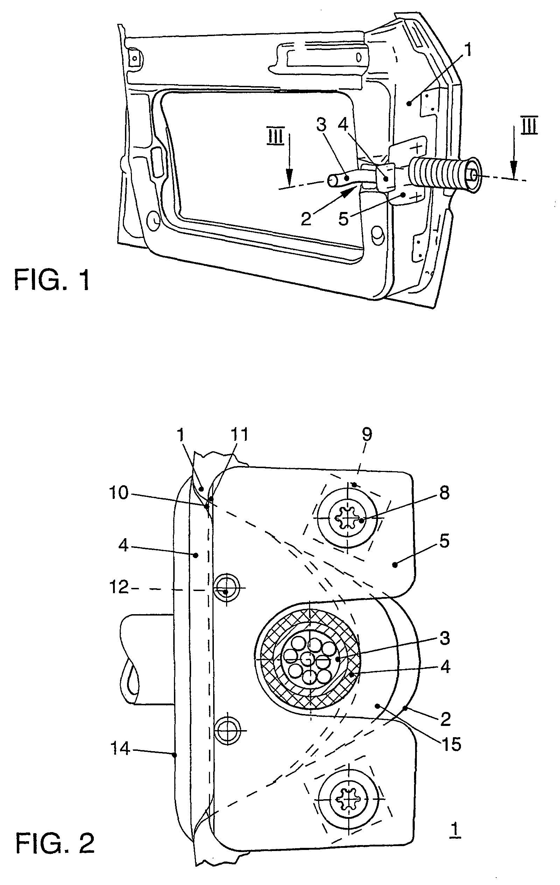

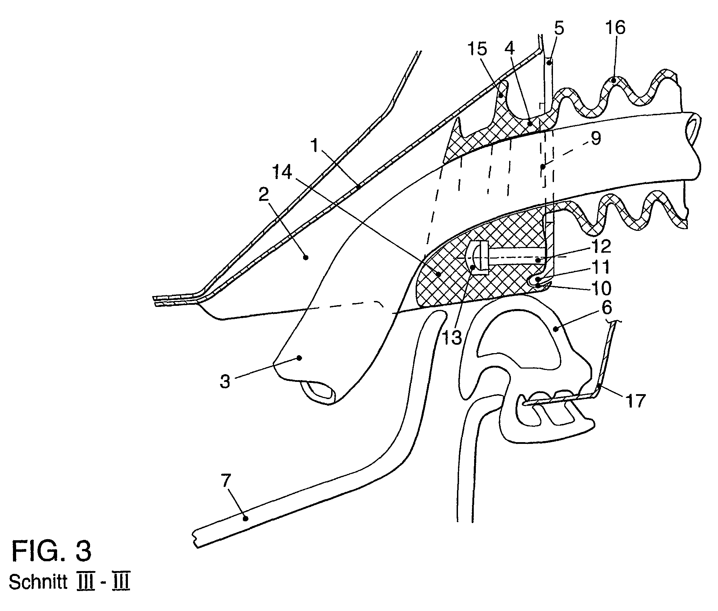

Die in Fig. 1 in perspektivischer Darstellung gezeigte Leitungsdurchführung ist in einer Einsenkung 2 in einer vorderen Fahrzeugtür von der Fahrzeuginnenseite her gesehen im Bereich der scharnierseitigen Stirnseite des Türinnenblechs 1 angeordnet. Die als Durchführungsraum für einen Leitungsstrang 3 dienende Einsenkung 2 beherbergt eine Dichtung 4, die den Leitungsstrang 3 umgibt und abdichtet. Die Dichtung 4 ist mit einem Halterungsblech 5 am Türinnenblech gehaltert und liegt, bezogen auf den Leitungsstrang 3, in radialer Richtung dichtend an diesem und der Einsenkung 2 an, wobei das Halterungsblech 5 am Türinnenblech 1 festgeschraubt ist, was in den Fig. 2 und 3 deutlich erkennbar ist. Der zur Fahrzeuginnenseite zu ausgebildete Bereich der Dichtung 4 liegt im Schließzustand der Fahrzeugtür an einer Türdichtung 6 an (Fig. 3) und dichtet den fahrzeuginnenseitig gegebenen Trockenraum, der insbesondere zwischen dem Türinnenblech 1 und einer Türinnenverkleidung 7 gegeben ist, gegenüber den die Fahrzeugtür außenseitig umgebenden Feuchtraum ab.

In Fig. 2 sind das stirnseitig am Türinnenblech 1 mit zwei Befestigungsschrauben 8 fixierte Halterungsblech 5, die Kontur der Einsenkung 2 und die Dichtung 4 mit dem Leitungsstrang 3 zu sehen, wobei dieser unmittelbar am Halterungsblech 5 geschnitten ist. Die Befestigungsschrauben 8 greifen in jeweils eine Schweißmutter 9 ein, die auf der dem Halterungsblech 5 abgewandten Seite des Türinnenblechs 1 an diesem angeschweißt sind. Im Bereich der fahrzeuginnenseitig ausgebildeten Kante des Halterungsblechs 5 weist die Dichtung 4 eine Nut 10 auf, in die dessen abgewinkelter Rand 11 eingreift, was im Schnitt in Fig. 3 zu sehen ist. Das Halterungsblech 5 ist zur Verbindung mit der Dichtung 4 mit zwei an diesem angeschweißten Rastdornen 12 versehen, die mit stirnwandseitig in dieser (4) ausgebildeten Rastaufnahmen 13 in Eingriff stehen.

Die Dichtung 5 ist aus einem eine Dichtwulst 14 und zwei Dichtlippen 15 aufweisenden Körper aus einem Elastomer gebildet, wobei die Dichtwulst 14 nach der Fahrzeuginnenseite zur Anlage an der Türdichtung 6 angeordnet und die Dichtlippen 15 einsenkungsseitig an der dieser abgewandten Seite an der Dichtung 4 ausgebildet sind. Die Dichtlippen 15 sind in axialer Richtung, also in Richtung des sich in der Einsenkung 2 erstreckenden Leitungsstranges 3, nebeneinander und im Abstand angeordnet und liegen am Türinnenblech 1 in der Einsenkung 2 an. Die Dichtung 4 ist feuchtraumseitig, d.h. an der Außenseite des Halterungsblechs 5, einstückig mit einem die Leitung 4 umgebenden Faltenbalg 16 verbunden, der mit einer A-Säule 17 verbindbar ist und den Leitungsstrang 3 im Bereich zwischen dieser und der Fahrzeugtür vom Feuchtraum abschottet.

Zur Montage der Leitungsdurchführung wird die Dichtung 4, deren Durchgangsöffnung für den Leitungsstrang 3 einen etwas kleineren Durchmesser als dieser hat, elastisch aufgeweitet, und der Leitungsstrang 3 wird, ggf. mit Steckverbindern versehen, in diese eingeführt und positioniert. Anschließend wird die Dichtung 4 wieder entspannt, wonach sie mit Vorspannung dicht am Leitungsstrang 3 anliegt. Danach wird das Halterungsblech 5 durch Eindrücken der Rastdorne 12 in die Rastaufnahme 13 mit der Dichtung 4 verbunden. Die auf diese Weise aus dem Leitungsstrang 3, der Dichtung 4 und dem Halterungsblech 5 gebildete Vormontageeinheit wird in die Einsenkung 2 eingeführt und am Türinnenblech 1 angeschraubt. Dabei wird die Dichtung in die Einsenkung 2 gedrückt. Wobei sich die Dichtlippen an die Wandung der Einsenkung 2 elastisch anlegen. Die Dichtwulst 14 füllt dabei den an der Türdichtung 6 anliegenden Kantenbereich des Türinnenblechs 1 im Bereich der Einsenkung 2 aus. Im Schließzustand der Fahrzeugtür liegt die Dichtwulst 14 an der Türdichtung 6 unter leichtem Druck elastisch und dichtend an.

### BEZUGSZEICHENLISTE

- 1: Türinnenblech
- 2: Einsenkung
- 3: Leitungsstrang
- 4: Dichtung
- 5: Halterungsblech
- 6: Türdichtung
- 7: Türinnenverkleidung
- 8: Befestigungsschraube
- 9: Schweißmutter
- 10: Nut
- 11: Rand
- 12: Rastdorn
- 13: Rastaufnahme
- 14: Dichtwulst
- 15: Dichtlippe
- 16: Faltenbalg
- 17: A-Säule

## Patentansprüche

1. Fahrzeugtür mit einer Leitungsdurchführung an der Stirnseite, wobei die Fahrzeugtür wenigstens ein Türaußenblech und ein mit diesem verbundenes Türinnenblech (1) aufweist und bei der am Türinnenblech (1) im Bereich einer Stirnseite von der Fahrzeuginnenseite her gesehen eine Einsenkung (2) als Durchführungsraum für eine Leitung (3) und als Anordnungsraum für eine Dichtung (4) ausgebildet ist, und wobei die Dichtung (4) am Türinnenblech (1) gehaltert ist und in radialer Richtung dichtend an der Leitung (3) und der Einsenkung (2) arliegt, **dadurch gekennzeichnet, daß** die Dichtung (4) im Schließzustand der Fahrzeugtür an einer Karosserieseitig befestigten Türdichtung (6) anliegt und den fahrzeuginnenseitig gegebenen Trockenraum gegenüber dem die Fahrzeugtür umgebenden Feuchtraum abdichtet.

2. Fahrzeugtür nach Anspruch 1, **dadurch gekennzeichnet, daß** die Dichtung (4) eine Dichtwulst (14) zur Anlage an der Türdichtung (6) aufweist.

3. Fahrzeugtür nach Anspruch 1, **dadurch gekennzeichnet, daß** die Dichtung (4) einstückig mit einem die Leitung im Feuchtraumbereich umgebenden Faltenbalg (17) verbunden ist.

4. Fahrzeugtür nach Anspruch 2, **dadurch gekennzeichnet, daß** die Dichtung (4) auf ihrer der Dichtwulst (14) in radialer Richtung abgewandten Seite mehrere in axialer Richtung nebeneinander angeordnete Dichtlippen (15) zur Anlage am Türinnenblech (1) in der Einsenkung (2) aufweist.

5. Fahrzeugtür nach Anspruch 1, **dadurch gekennzeichnet, daß** die Dichtung (4) mit einem die Einsenkung (2) an der Stimwandung des Türinnenblechs (1) überdeckenden und an diesem lösbar befestigten Halterungsblech (5) versehen ist.

6. Fahrzeugtür nach Anspruch 5, **dadurch gekennzeichnet, daß** das Halterungsblech (5) mit Rastdornen (12) in in der Dichtung (4) ausgebildeten Rastaufnahmen (13) fixiert ist.

## Claims

1. Vehicle door having a cable bushing on the end side, the vehicle door having at least one outside door panel and one inside door panel connected thereto, and in which a cavity (2) is formed on the inside door panel (1) in the region of an end side, as seen from the inside of the vehicle, as a bushing space for a cable (3) and as an arranging space for a seal (4), and the seal (4) being held in place on the inside door panel (1) and bearing in a sealing manner in the radial direction against the cable (3) and the cavity (2), **characterized in that** when the vehicle door is closed, the seal (4) bears against a door seal (6) fastened on the bodywork and seals off the dry space provided on the inside of the vehicle from the moist space surrounding the vehicle door.

2. Vehicle door according to Claim 1, **characterized in that** the seal (4) has a sealing bead (14) for bearing against the door seal (6).

3. Vehicle door according to Claim 1, **characterized in that** the seal (4) is connected integrally to an expansion bellows (17) surrounding the cable in the region of the moist space.

4. Vehicle door according to Claim 2, **characterized in that** the seal (4) has, on its side facing away from the sealing bead (14) in the radial direction, a plurality of sealing lips (15) arranged next to one another in the axial direction for bearing against the inside door panel (1) in the cavity (2).

5. Vehicle door according to Claim 1, **characterized in that** the seal (4) is provided with a securing plate (5) which covers the cavity (2) on the end wall of the inside door panel (1) and is fastened releasably to the latter.

6. Vehicle door according to Claim 5, **characterized in that** the securing plate (5) is fixed in place with latching studs (12) in latching sockets (13) formed in the seal (4).

## Revendications

1. Porte de véhicule comprenant un passage de câble du côté frontal, dans laquelle la porte de véhicule présente au moins une tôle de porte extérieure et une tôle de porte intérieure (1) connectée à celle-ci, et dans laquelle est pratiquée, sur la tôle de porte intérieure (1) dans la région d'un côté frontal vu depuis le côté intérieur du véhicule, une dépression (2) sous forme d'espace de passage pour un câble (3) et sous forme d'espace d'agencement pour un joint (4) et dans laquelle le joint (4) est fixé sur la tôle de porte intérieure (1) et s'applique dans la direction radiale de manière hermétique contre le câble (3) et la dépression (2), **caractérisée en ce que** le joint (4) dans l'état de fermeture de la porte de véhicule s'applique contre un joint de porte (6) fixé du côté de la carrosserie et ferme hermétiquement l'espace sec formé du côté intérieur du véhicule vis-à-vis de l'espace humide entourant la porte du véhicule.

2. Porte de véhicule selon la revendication 1, **caractérisée en ce que** le joint (4) présente un bourrelet d'étanchéité (14) destiné à s'appliquer contre le joint de porte (6).

3. Porte de véhicule selon la revendication 1, **caractérisée en ce que** le joint (4) est connecté d'une seule pièce à un soufflet (17) entourant le câble dans la région de l'espace humide.

4. Porte de véhicule selon la revendication 2, **caractérisée en ce que** le joint (4) présente sur son côté opposé au bourrelet d'étanchéité (14) dans la direction radiale plusieurs lèvres d'étanchéité (15) disposées les unes à côté des autres dans la direction axiale, destinées à s'appliquer contre la tôle de porte intérieure (1) dans la dépression (2).

5. Porte de véhicule selon la revendication 1, **caractérisée en ce que** le joint (4) est pourvu d'une tôle de fixation (5) recouvrant la dépression (2) au niveau de la paroi frontale de la tôle de porte intérieure (1) et fixée de manière desserrable à celle-ci.

6. Porte de véhicule selon la revendication 5, **caractérisée en ce que** la tôle de fixation (5) est fixée avec des goujons d'encliquetage (12) dans des évidements d'encliquetage (13) réalisés dans le joint (4).
